# EUROPÄISCHE PATENTANMELDUNG

(11) **EP 1 528 450 A1**
(43) Veröffentlichungstag der Anmeldung: **04.05.2005**
(21) Anmeldenummer: 03024561.7
(22) Anmeldetag: 27.10.2003
(51) Int. Cl.: G06F 1/00

(54) **Verfahren zum Identifizieren, Authentifizieren und Autorisieren eines Benutzers von geschützen Daten**

(71) Anmelder: SIEMENS AKTIENGESELLSCHAFT, 80333 München (DE)
(72) Erfinder: Herberth, Harald, 90522 Oberasbach (DE)

(57) **Zusammenfassung**

Die vorliegende Erfindung betrifft ein Verfahren zum Identifizieren, Authentifizieren und Autorisieren eines Benutzern von geschützten Daten, insbesondere eines Benutzers von geschützten Daten in einem Automatisierungssystem, wobei:
- der Benutzer, durch die vom ihm in ein Eingabefeld (10) in einem Anmeldebereich eingebbare Benutzerkennung (NAME="*name1*";"*name2*";"*nameG*";...) identifiziert wird,
- diese eingebbare Benutzerkennung (NAME) mit einem vom Benutzer eingebbaren Passwort (PW="*pw1*";"*pw2*";"*pwG*";...) zusammengefasst und mit einer Einweg-Verschlüsselungsfunktion (20) in eine Systemkennung (token1,token2,token3,...), die den Benutzer authentifiziert, überführt wird,
- zumindest diese Systemkennung (token1,token2,token3,...) in einem Zugriffsbezeichner (30) vom Anmeldbereich in einen geschützten Bereich übertragen wird, und
- der Benutzer durch diesen übertragenen Zugriffsbezeichner (30) autorisiert wird, Zugang zu geschützten Daten (Funktion A, Funktion B, Funktion C,...) im geschützten Bereich zu erhalten.

## Beschreibung

Die vorliegende Erfindung betrifft ein Verfahren zum Identifizieren, Authentifizieren und Autorisieren eines Benutzers von geschützten Daten, insbesondere eines Benutzers von geschützten Daten in einem Automatisierungssystem, gemäß dem Oberbegriff des Anspruchs 1.

Auf vielen technischen Gebieten, insbesondere auch bei Automatisierungssystemen, wird es zunehmend wichtiger, dass auf die in einem geschützten Bereich vorhandenen Daten, wie zum Beispiel Systemdaten, Programmdaten, Systemfunktionen oder andere geschützte Informationen nur zuvor identifizierte, authentifizierte und autorisierte Benutzer zugreifen können.

Verfahren zum Authentifizieren von Benutzern sind heute weit verbreitet. So wird beispielsweise anhand eines, vom Benutzer in ein Eingabefeld eines Anmeldebereichs, eingegebenen Passwortes der Benutzer authentifiziert. Wurde vom Benutzer ein gültiges Passwort eingegeben, so ist er authentifiziert und erhält Zugang zu den im geschützten Bereich vorhandenen Informationen. Zur Übertragung des Passwortes vom Anmeldbereich in den geschützten Bereich wird das Passwort mittels entsprechender Algorithmen, wie beispielsweise dem als MD5 bekannten Verschlüsselungsalgorithmus, verschlüsselt und als sogenannter Zugriffsbezeichner in den geschützten Bereich übertragen. Anhand dieses, im Zugriffsbezeichner übertragenen und verschlüsselten Passwortes ist es im geschützten Bereich aber nicht mehr oder nur noch sehr schwer möglich den Benutzer zu identifizieren und dessen Zugriff gegebenenfalls zu protokollieren. Somit kann in aller Regel im geschützten Bereich nicht mehr nachvollzogen werden, wer genau auf die im geschützten Bereich vorhandene Information und Daten zugegriffen hat.

Damit auch im geschützten Bereich festgestellt werden kann, wer und gegebenenfalls wann ein Benutzer, auf die geschützten Daten zugegriffen hat, müssen entsprechende Verfahren zum Identifizieren des Benutzers vorgesehen werden. So kann beispielsweise vorgesehen werden, dass der Benutzer neben dem Passwort auch eine ihm zugeordnete Benutzerkennung in das Eingabefeld im Anmeldebereich eingeben muss. Diese Benutzerkennung und das Passwort werden dann mit den in einer Benutzer-Management-Datenbank gespeicherten zulässigen Kombinationen aus Benutzerkennungen und Passwort verglichen. Stimmt die eingegebene Benutzerkennung mit einem der gespeicherten Benutzerkennungen überein, ist der Benutzer identifiziert. Stimmt zusätzlich noch das eingegebene Passwort mit einer der gespeicherten Kombinationen überein, ist der Benutzer zudem authentifiziert. Anschließend werden die Benutzerkennung sowie gegebenenfalls das verschlüsselte Passwort als Zugriffsbezeichner in den geschützten Bereich übertragen. In einer Datenbank im geschützten Bereich sind für die zulässigen Benutzerkennungen und Passwörter die dazugehörigen Zugangsberechtigungen gespeichert. Findet sich für das übertragene Passwort und die übertragene Benutzerkennung in der Datenbank eine dazugehörigere Zugangsberechtigung, erhält der Benutzer Zugang zu den entsprechenden geschützten Daten und Informationen. Gleichzeitig kann zusätzlich anhand der übertragenen Benutzerkennung nun auch im geschützten Bereich eine Protokollierung der erfolgten Zugänge erfolgen.

Sollen die in Automatisierungssystemen vorhandenen Daten wie Systemdaten, Systemfunktionen oder andere wichtige Informationen geschützt werden, so müssen auch hier entsprechende Verfahren vorgesehen werden, die eine Identifizierung und Authentifizierung von Benutzern ermöglicht. Wird in einem Automatisierungssystem nun das zuvor beschriebene Verfahren zur reinen Authentifizierung anhand eines verschlüsselten Passwortes eingesetzt, so kann im geschützten Bereich nicht protokolliert werden, wer auf diesen geschützten Bereich zugegriffen hat. Wird das oben beschriebene Verfahren zur Identifizierung anhand von Passwort und Benutzerkennung eingesetzt, so ergibt sich aufgrund der dafür notwendigen Benutzer-Management-Datenbanken im Anmeldebereich und im geschützten Bereich ein hoher Verwaltungsaufwand. Gerade wenn von mehreren Anwenderbereichen auf einen oder auch mehrere geschützte Bereiche des Automatisierungssystems zugegriffen werden soll, erfordert dieses Verfahren somit einen hohen Aufwand, um die sowohl in den Anwenderbereichen als auch in den verschiedenen geschützten Bereichen vorhandenen Benutzer-Management-Datenbanken mit den darin enthaltenen Benutzerkennungen, Passwörtern und deren zulässigen Kombinationen zu verwalten.

Soll neben der Identifizierung und Authentifizierung von Benutzern des Automatisierungssystems zusätzlich noch eine Autorisierung der Benutzer erfolgen, müssen die Benutzer-Management-Datenbanken im geschützten Bereich entsprechend erweitert werden. So sind dann in diesen Benutzer-Management-Datenbanken zusätzlich die Zusammenhänge zu hinterlegen, welcher Benutzer mit welcher Benutzerkennung und welchem Passwort zu welchen der geschützten Informationen beziehungsweise Daten Zugriff hat. Insbesondere, wenn in einem Automatisierungssystem mehrere verschiedene geschützte Bereiche vorhanden sind, müssen diese Zugangsberechtigungen entsprechend aufwendig für alle Benutzer-Management-Datenbanken der verschiedenen Bereiche verwaltet werden, was einen nicht unerheblichen zusätzlichen Aufwand bedeutet.

Aufgabe der vorliegenden Erfindung ist deshalb, ein Verfahren zum Identifizieren, Authentifizieren und Autorisieren von Benutzern von geschützten Daten bereitzustellen, dass die zuvor beschriebenen Nachteile des hohen Verwaltungsaufwands, insbesondere für ein Automatisierungssystem vermeidet.

Diese Aufgabe wird gelöst durch ein Verfahren mit den Merkmalen des Anspruchs 1, indem zum Identifizieren, Authentifizieren und Autorisieren eines Benutzers von geschützten Daten, insbesondere eines Benutzers von geschützten Daten in einem Automatisierungssystems
- der Benutzer, durch die vom ihm in ein Eingabefeld in einem Anmeldebereich eingebbare Benutzerkennung identifiziert wird,
- diese eingebbare Benutzerkennung mit einem vom Benutzer eingebbaren Passwort zusammengefasst und mit einer Einweg-Verschlüsselungsfunktion in eine Systemkennung, die den Benutzer authentifiziert, überführt wird,
- zumindest diese Systemkennung in einem Zugriffsbezeichner vom Anmeldbereich in einen geschützten Bereich übertragen wird, und
- der Benutzer durch diesen übertragenen Zugriffsbezeichner autorisiert wird, Zugang zu geschützten Daten im geschützten Bereich zu erhalten.

Da erfindungsgemäß das Passwort zusammen mit der Benutzerkennung mit einer Einweg-Verschlüsselungsfunktion in eine gemeinsame Systemkennung überführt werden, ist jedem Benutzer aufgrund des in der Systemkennung enthaltenen Passwortes und Benutzerkennung genau eine Systemkennung zugeordnet. Diese Systemkennung kann somit im Anmeldebereich dazu benutzt werden, den Benutzer eindeutig zu identifizieren und zu authentifizieren. Zudem kann im geschützten Bereich anhand der, im Zugriffsbezeichner übertragenen Systemkennung der Benutzer autorisiert werden, um Zugang zu bestimmten geschützten Daten und Informationen zu erlangen. Da diese Zugangsberechtigung auch gleichzeitig die zuvor authentifizierte Identität des Benutzer wiederspiegelt, kann bei dem erfindungsgemäßen Verfahren auch ohne großen Verwaltungsaufwand ein Benutzer identifiziert, authentifiziert und autorisiert werden. Insbesondere in einem Automatisierungssystem mit mehreren verschiedenen geschützten Bereichen, wie zum Beispiel verschiedene Steuerungen; oder auch mit mehreren Anmeldebereichen, wie zum Beispiel verschiedene Mensch-Maschine-Schnittstellen, ist nun keine aufwendige Verwaltung der Benutzerdaten, wie Passwort, Benutzerkennung und deren Zusammenhänge mehr notwendig. Damit kann insbesondere bei Automatisierungssystemen Projektierungsaufwand für die Realisierung solcher Sicherheitsfunktionen für die Identifizierung, Authentifizierung und Autorisierung vermieden werden.

Obwohl die vorliegende Erfindung sich auf Einweg-Verschlüsselungsfunktionen beschränkt, sollte auch jede andere Funktion, die eine eindeutige und nicht rückrechenbare Überführung der Benutzerkennung und des Passwortes in eine Systemkennung erlaubt, von der Erfindung mit umfasst sein.

Weitere vorteilhafte Ausführungen und bevorzugte Weiterbildungen der Erfindung sind den Unteransprüchen zu entnehmen.

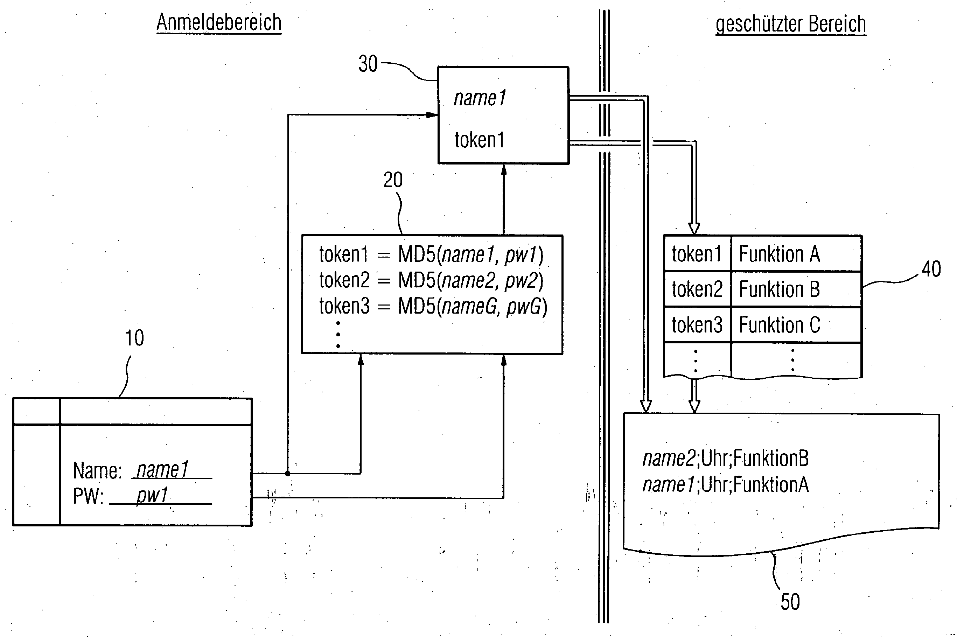

Das erfindungsgemäße Verfahren wird nun beispielhaft anhand der beiliegenden Figur näher beschrieben.

Die Figur weist zwei Bereiche, nämlich einen Anmeldebereich und einen geschützten Bereich auf. Der Anmeldebereich soll alle notwendigen Maßnahmen und Schritte umfassen, insbesondere die Eingabe von Passwörtern und Benutzerkennungen. Üblicherweise wird dieser Anmeldebereich in einer sogenannten Mensch-Maschine-Schnittstelle, auf der beispielsweise ein Anwenderbereich für das Automatisierungssystem abgebildet ist, eingebunden sein. Der geschützte Bereich soll dagegen alle Daten und Funktionen umfassen, die insbesondere in einem Automatisierungssystem, in besonderer Weise geschützt werden sollen. So sind insbesondere die im Automatisierungssystem vorhandenen zu schützenden Daten, wie Systemdaten, Programmdaten, Objekte, Systemfunktionen oder andere wichtige Informationen im geschützten Bereich hinterlegt. Die Figur zeigt dabei nur schematisch die für die vorliegende Erfindung notwendige Trennung zwischen Anmeldebereich und geschützten Bereich. Insbesondere in einem Automatisierungssystem wird diese Trennung aber nicht immer eindeutig erkennbar sein. So kann der geschützte Bereich beispielsweise eine oder auch mehrere in Hardware vorliegende Baugruppen des Automatisierungssystems, wie beispielsweise eine oder mehrere Steuerungen, umfassen. Andererseits könnte der geschützte Bereich aber auch ein, beispielsweise auf einen Wartungs-Computer herunterladbares Softwaremodul, das die zu schützende Informationen, wie beispielsweise Steuerdaten des Automatisierungssystems enthält, umfassen. In diesem Falle würde sich auf dem Wartungs-Computer sowohl der Anmeldebereich als auch der geschützte Bereich befinden. Andererseits könnte auch von mehreren verschiedenen Mensch-Maschine-Schnittstellen aus der Anmeldebereich aufgerufen werden.

Der in der Figur gezeigte Anmeldebereich umfasst ein Eingabefeld 10, in das ein Benutzer ein Passwort PW und eine Benutzerkennung NAME eingeben muss. Sowohl das Passwort PW als auch die Benutzerkennung NAME sind dabei schon für einen oder mehrerer Benutzer oder aber auch für eine ganze Benutzergruppe a priori festgelegt. So wird jedem Benutzer, der Zugang zum geschützten Bereich haben soll, ein eigenes Passwort wie zum Beispiel PW ="*pw1*"*;*"*pw2*"*;*... und eine eigene Benutzerkennung, wie zum Beispiel NAME ="*name1*"*;*"*name2*"*;*... zugewiesen. Andererseits ist es aber auch möglich einer Gruppe von Benutzern ein gemeinsames Passwort, wie zum Beispiel PW *="pwG"* oder eine gemeinsame Benutzerkennung NAME ="*nameG*" zuzuweisen.

Wurden von einem Benutzer, so wie in der Figur gezeigt, nun beispielsweise im Eingabefeld 10 die Benuterkennung NAME = "*name1*" und das Passwort PW = "*pw1*" eingegeben, so wird anhand der Eingabe "*name1*" der Benutzer identifiziert. Erfindungsgemäß wird aber auch die eingegebene Benutzerkennung "*name1*" zusammen mit dem eingegebenen Passwort "*pw1*" mittels einer bekannten Einweg-Verschlüsselungsfunktion 20 in eine Systemkennung token1 überführt. Die für die erfindungsgemäße Überführung des Passwortes und der Benutzerkennung in die entsprechende Systemkennung verwendeten Einweg-Verschlüsselungsfunktionen sind beispielsweise die aus der Kryptographie bekannten MD5- oder die HMAC-Funktion. Sowohl die MD5- als auch die HMAC- Funktionen sind dabei in sogenannten RFC (Request for Comments) definiert. Das sind insbesondere der RFC 1321 für den MD5-(Message-Digest) Algorithmus und der RFC 2104 für den HMAC-(Keyed-Hashing for Message Authenticsation) Algorithmus. So wird im vorliegenden Beispiel die Benutzerkennung "*name1*" und das Passwort "*pw1*" mittels des MD5-Algorithmus in die Systemkennung token1 überführt. Im Klartext könnte diese mittels MD5-Algorithmus erzeugte Systemkennung dann beispielsweise so aussehen: token 1 = 7071587f93a00d4b50f724ff683d1fd7. Diese so erzeugte Systemkennung token1 kennzeichnet dabei eindeutige einen Benutzer, das bedeutet, dass anhand der Systemkennung token1 der Benutzer mit dem Namen "*name1*" und dem Passwort "*pw1*" eindeutig identifiziert und authentifiziert werden kann. Entsprechend lassen sich anhand weitere Systemkennungen token2, token3, ...usw. weitere Benutzer aber auch ganze Benutzergruppen identifizieren und authentifizieren. Ist ein Benutzer oder eine Benutzergruppe anhand der eingegebenen Benutzerkennung identifiziert und ist diese Identität authentifiziert, wird für die Autorisierung zumindest die Systemkennung token1, token2, token3, usw. als sogenannter Zugriffsbezeichner 30, beispielsweise in Form einer binärer Zahlenkette vom Anmeldebereich in den geschützten Bereich übertragen.

Im vorliegenden Beispiel des erfindungsgemäßen Verfahrens wird die Systemkennung token1 zusammen mit der eingegebenen Benutzerkennung "*name1*" als Zugriffsbezeichner 30 übertragen. Dabei ist im Zugriffsbezeichner 30 die eingegebene Benutzerkennung "*name1*" als Klartext aufgenommen, während die Systemkennung token1 selbst nicht als Klartext im Zugriffsbezeichner 30 vorliegt. Damit kann der Zugriffsbezeichner unterteilt werden in einen öffentlichen Teil, der die Benutzerkennung NAME umfasst, und einen geheimen Teil, der die Systemkennung MD5(NAME,PW) umfasst. Im geschützten Bereich erfolgt dann anhand des übertragenen Zugriffsbezeichners 30 und der darin enthaltenen Systemkennung token1 die Autorisierung des zuvor bereits Identifizierten und Authentifizierten Benutzers. Dabei wird beispielsweise die im Zugriffsbezeichner 30 übertragene Systemkennung token1, die ja einer authentifizierten Identität des Benutzer mit der Benutzerkennung "*name1*" und dem Passwort "*pw1*" entspricht, mit der in einer Datenbank 40 hinterlegten Zuordnung von Systemkennungen und geschützten Daten verglichen. Ist in der Datenbank 40 für diese Systemkennung token1 eine entsprechende zulässige Zuordnung vorhanden, erhält der Benutzer oder die Benutzergruppe den entsprechenden Zugriff auf die entsprechenden geschützten Daten, im vorliegenden Beispiels als Funktion A bezeichnet, im geschützten Bereich. Insbesondere können dabei für verschiedenen Systemkennungen unterschiedliche Zugangsberechtigungen in der Datenbank 40 definiert sein. So ist im vorliegenden Beispiel festgelegt, dass ein Benutzer mit der Benutzerkennung "*name1*" und dem Passwort "*pw1*" Zugriff auf die geschützten Daten mit der Bezeichnung Funktion A erhält, und ein Benutzer mit der Benutzerkennung "*name2*" und dem Passwort "*pw2*" Zugriff auf die geschützten Daten mit der Bezeichnung Funktion B erhält. Zudem erhält eine Benutzergruppe mit der Benutzerkennung "*nameG"* und dem Passwort "*pwG*" Zugriff auf die geschützten Daten mit der Bezeichnung Funktion C. Mit diesen, aber auch weiteren Kombinationen aus Benutzerkennungen und Passwörtern ist es somit möglich, auf einfachste Art und Weise, ohne großen Verwaltungsaufwand, Benutzer zu identifizieren, authentifizieren und autorisieren und Ihnen damit Zugang zu geschützten Daten zu ermöglichen.

Vorzugsweise können zudem anhand der im Zugriffsbezeichner 30 enthaltenen Benutzernamen in einem Zugriffsprotokoll 50 zumindest die autorisierten Zugriffe auf die geschützten Daten protokolliert werden. Dazu wird bei jedem der übertragenen Zugriffsbezeichner 30 die als Klartext vorliegende Benutzerkennung NAME entnommen und zusammen mit der autorisierten Zugangsberechtigung, und gegebenenfalls einem Zeitstempel, in diesem Zugriffsprotokoll 50 protokolliert. Somit können dann auch, zumindest die erfolgten autorisierten Zugriffe auf geschützte Daten, überwacht werden.

Insbesondere in Bezug auf die zu schützenden Daten in einem Automatisierungssystem erlaubt das erfindungsgemäße Verfahren, einen geringen Verwaltungsaufwand von Benutzerdaten. So werden üblicherweise die auf einer oder mehrerer Steuerung des Automatisierungssystems vorliegenden Daten über verschiedenen Wartungs-PC's abgerufen. Da nun erfindungsgemäß gerade auf der Anmeldeseite keine aufwendige Verwaltung in Form von Benutzer-Management-Datenbanken vorliegt, kann insbesondere die Projektierung des Automatisierungssystems vereinfacht werden, da nun nicht für jeden einzelnen Wartungs-Computer einen solche Benutzer-Management-Datenbanken projektiert werden muss.

## Patentansprüche

1. Verfahren zum Identifizieren, Authentifizieren und Autorisieren eines Benutzers von geschützten Daten, insbesondere eines Benutzers von geschützten Daten in einem Automatisierungssystem, wobei:
- der Benutzer, durch die vom ihm in ein Eingabefeld (10) in einem Anmeldebereich eingebbare Benutzerkennung (NAME="*name1*"*;*"*name2*"*;*"*nameG*"*;*...) identifiziert wird,
- diese eingebbare Benutzerkennung (NAME) mit einem vom Benutzer eingebbaren Passwort (PW="*pw1*"*;*"*pw2*"*;*"*pwG*"*;*...) zusammengefasst und mit einer Einweg-Verschlüsselungsfunktion (20) in eine Systemkennung (token1,token2,token3,...), die den Benutzer authentifiziert, überführt wird,
- zumindest diese Systemkennung (token1,token2,token3,...) in einem Zugriffsbezeichner (30) vom Anmeldbereich in einen geschützten Bereich übertragen wird, und
- der Benutzer durch diesen übertragenen Zugriffsbezeichner (30) autorisiert wird, Zugang zu geschützten Daten (Funktion A, Funktion B, Funktion C, ...) im geschützten Bereich zu erhalten.

2. Verfahren nach Anspruch 1,
**dadurch gekennzeichnet, dass** im Zugriffsbezeichner (30) zusätzlich zur Systemkennung (token1,token2,token3,...) die vom Benutzer eingegebene Benutzerkennung (NAME="*name1*"*;*"*name2*"*;*"*nameG*"*;*...) in Klartext übertragen wird, wobei zumindest jeder autorisierte Zugang zu geschützten Daten zusammen mit der übermittelten Benutzerkennung (NAME) in einem Zugriffsprotokoll (50) protokolliert wird.

3. Verfahren nach Anspruch 1 oder 2,
**dadurch gekennzeichnet, dass**
der Zugang zu geschützten Daten (Funktion A, Funktion B, Funktion C, ...) autorisiert wird, indem die mit dem Zugriffsbezeichner (30) übertragene Systemkennung (token1,token2,token3,...) mit einer in einer Datenbank (40) hinterlegten Zugriffsberechtigungen für geschützten Daten (Funktion A, Funktion B, Funktion C,...) verglichen wird.
